# EUROPÄISCHE PATENTSCHRIFT

(11) **EP 2 404 091 B1**
(45) Veröffentlichungstag und Bekanntmachung des Hinweises auf die Patenterteilung: **20.02.2013**
(21) Anmeldenummer: 10710193.3
(22) Anmeldetag: 05.03.2010
(51) Int. Cl.: F16K 31/60

(54) **SANITÄRE EINHAND-MISCHBATTERIE**
SANITARY SINGLE-LEVER MIXER UNIT
MÉLANGEUR SANITAIRE À COMMANDE D'UNE SEULE MAIN

(30) Priorität: 06.03.2009 DE 102009011560
(43) Veröffentlichungstag der Anmeldung: 11.01.2012
(73) Patentinhaber: Hansa Metallwerke AG, 70567 Stuttgart (DE)
(72) Erfinder: HARSCH, Martin, 74395 Mundelsheim (DE)
(74) Vertreter: Ostertag, Ulrich
(86) Internationale Anmeldenummer: PCT/EP2010/001386
(87) Internationale Veröffentlichungsnummer: WO 2010/099978

(56) Entgegenhaltungen:
- EP-A2- 0 818 647
- DE-A1- 3 103 891
- DE-A1- 19 602 161
- DE-A1-102005 040 160

## Beschreibung

Die Erfindung betrifft eine sanitäre Einhand-Mischbatterie mit
a) einem Armaturengehäuse;
b) einer Steuerkartusche, die in einem Aufnahmeraum des Armaturengehäuses angeordnet ist und mindestens ein einen Wasserstrom steuerndes Steuerelement aufweist, das seinerseits von einem um mindestens eine Achse verschwenkbaren Stellschaft bewegbar ist;
c) einem ringförmigen Abdeckteil, welches den Aufnahmeraum der Steuerkartusche nach oben teilweise abdeckt, eine von oben gesehen konvexe ringfömige äußere Kugelkalottenfläche aufweist und von dem Stellschaft durchsetzt wird;
d) einem Bediengriff, der seinerseits umfasst:
   da) eine Kappe, welche das Abdeckteil übergreift und die an ihrer Unterseite eine Aufnahme aufweist, in welche der obere Endbereich des Stellschaftes einführbar ist;
   db) einen Handgriff, der starr mit der Kappe verbunden ist;
   wobei
e) die Kappe des Bedienungsgriffes an ihrer Unterseite eine von unten gesehen kokave ringförmige Kugelkalottenfläche aufweist.

Sanitäre Einhand-Mischbatterien dieser Art sind in unterschiedlichsten Ausgestaltungen vom Markt her bekannt. Bei diesen wird der obere Endbereich des Stellschaftes der Steuerkartusche so weit in die Aufnahme der Kappe des Bediengriffes eingeführt, bis ein zwischen dem Stellschaft und der Aufnahme wirkender Anschlag dieser Einführbewegung ein Ende setzt. Diese Bauweise hat nun folgende Konsequenz: Da alle Teile einer Steuerkartusche stets toleranzbehaftet sind, insbesondere auch in axialer Richtung, kann die Höhenposition des Stellschaftes im Aufnahmeraum des Armaturengehäuses von Steuerkartusche zu Steuerkartusche nicht unerheblich variieren. Damit variiert auch die Höhenposition des zwischen der Aufnahme der Kappe und dem Stellschaft wirkenden Anschlages, was wiederum zur Folge hat, dass der vertikale Abstand zwischen der Kappe und dem Armaturengehäuse bzw. dem Abdeckteil variiert. Dies ist bei solchen Einhand-Mischbatterien irrelevant, deren Kappe das Armaturengehäuse insbesondere in der Schließstellung der Einhand-Mischbatterie in vertikaler Richtung überlappt, so dass zwischen dem unteren Rand der Kappe und der Mantelfläche des Armaturengehäuses ein horizontaler Spalt verbleibt, dessen Breite im Wesentlichen unabhängig von der Höhenposition der Kappe ist.

Eine Einhand-Mischbatterie der eingangs genannten Art ist in der DE 10 2005 040 160 A1 beschrieben.

In jüngster Zeit werden aus ästhetischen Gründen solche Kappen gewünscht, deren Durchmesser im Wesentlichen dem Durchmesser des benachbarten Bereiches des Armaturengehäuses entspricht, so dass sich die Kappe optisch als Fortsetzung des Armaturengehäuses darstellt. In diesen Fällen äußert sich die unterschiedliche vertikale Position der Kappe, die auf Toleranzen der Bauelemente der Steuerkartusche zurückgeht, in unterschiedlichen vertikalen Spaltbreiten zwischen dem unteren Rand der Kappe und dem Abdeckteil bzw. dem Armaturengehäuse.

Aufgabe der vorliegenden Erfindung ist es, eine sanire Einhand-Mischbatterie der eingangs genannten Art derart auszugestalten, dass im Wesentlichen unabhängig von inneren Toleranzen der Steuerkartusche ein kleiner, reproduzierbarer Spalt zwischen dem unteren Rand der Kappe und dem Abdeckteil bzw. dem oberen Rand des Armaturengehäuses erzielbar ist.

Diese Aufgabe wird erfindungsgemäß dadurch gelöst, dass
f) an dem Abdeckteil ein Gleitring gehaltert ist, der die Kugelkalottenfläche des Abdeckteils nach oben überragt und auf dessen oberem Rand die Kugelkalottenfläche der Kappe gleitet;
   derart, dass
g) die Kugelkalottenflächen des Abdeckteils und der Kappe in allen Positionen des Bediengriffs einen definierten, geringen Abstand voneinander aufweisen.

Erfindungsgemäß wird also die Eindringtiefe des oberen Endbereiches des Stellschaftes in die Aufnahme der Kappe nicht mehr durch einen Anschlag bewirkt, der zwischen diesen beiden Bauteilen wirksam ist. Vielmehr findet die Aufschiebbewegung der Kappe auf den Stellschaft dann ihr Ende, wenn die Kugelkalottenfläche der Kappe auf den oberen Rand des Gleitringes trifft. Diese Position ist verständlicherweise nicht davon abhängig, wie im Einzelnen die Toleranzen der in der Steuerkartusche verbauten Elemente sind. Eine direkte Anlage der beiden Kugelkalottenflächen wird jedoch vermieden, die zum einen insbesondere bei einer Verschmutzung zu einer Schwergängigkeit des Griffes und zu Beschädigungen der aneinanderliegenden Flächen führen könnte und die zum anderen auch in vielen Fällen nicht ohne weiteres realisierbar ist, insbesondere dann, wenn das Abdeckteil selbst nicht rotationssymmetrisch ist.

Der erfindungsgemäß eingesetzte Gleitring dagegen bietet eine verhältnismäßig kleine Kontaktfläche zur Kugelkalottenfläche der Kappe; der entsprechende anliegende Rand kann zudem in seinem Höhenverlauf so geführt werden, dass bei allen möglichen Bewegungen des Bediengriffes die Anlage des oberen Randes des Gleitringes an der Kugelkalottenfläche der Kappe aufrecht erhalten bleibt, ohne dass es zu Kollisionen in der Bewegung zwischen Kappe des Bediengriffes und Abdeckteil bzw. Armaturengehäuse kommt.

Wie bereits oben angedeutet, sind in vielen Fällen das Abdeckteil und/oder der Gleitring nicht rotationssymmetrisch. In diesem Falle ist eine Ausführungsform der Erfindung besonders zweckmäßig, bei welcher Abdeckteil und Gleitring drehschlüssig miteinander verbunden sind, derart, dass die Winkelposition des Abdeckteils durch Verdrehen des Gleitrings einstellbar ist. Die fehlende Rotationssymmetrie von Abdeckteil und/oder Gleitring benötigt nämlich bei der Montage eine winkelmäßige Ausrichtung von Abdeckteil und/oder Gleitring. Diese kann bei der soeben geschilderten Ausführungsform der Erfindung leicht durch Ansetzen an dem nach oben ragenden Gleitring bewirkt werden.

Besonders vorteilhaft ist dabei, wenn an der Unterseite der Kappe mindestens eine nach unten ragende Nase vorgesehen ist, die beim Verdrehen des Bediengriffs mit mindestens einem an dem Gleitring vorgesehenen Anschlag zusammenwirkt. Bei dieser Ausführungsform können Abdeckteil und Gleitring zunächst ohne Rücksichtnahme auf ihre Winkelorientierung montiert werden, was insbesondere auch automatisiert erfolgen kann. Die richtige Orientierung von Abdeckteil und Gleitring wird dann mit Hilfe des aufgesetzten Bediengriffes erzielt, indem dieser nämlich bis zu einer oder beiden Endstellungen verschwenkt wird. Seine Nase nimmt dabei den Gleitring und mit diesem das Abdeckteil in die richtige Winkelorientierung mit.

Ein Ausführungsbeispiel der Erfindung wird nachstehend anhand der Zeichnung erläutert; es zeigen:
- Figur 1: einen Axialschnitt durch den oberen Bereich einer Einhand-Mischbatterie in geschlossenem Zustand;
- Figur 2: einen Schnitt, ähnlich der Figur 1, in dem die Einhand-Mischbatterie jedoch geöffnet ist;
- Figur 3: einen Schnitt gemäß Linie III-III von Figur 1;
- Figur 4: in vergrößertem Maßstab und perspektivisch einen Gleitring, der in der Einhand-Mischbatterie der Figuren 1 bis 3 verwendet wird.

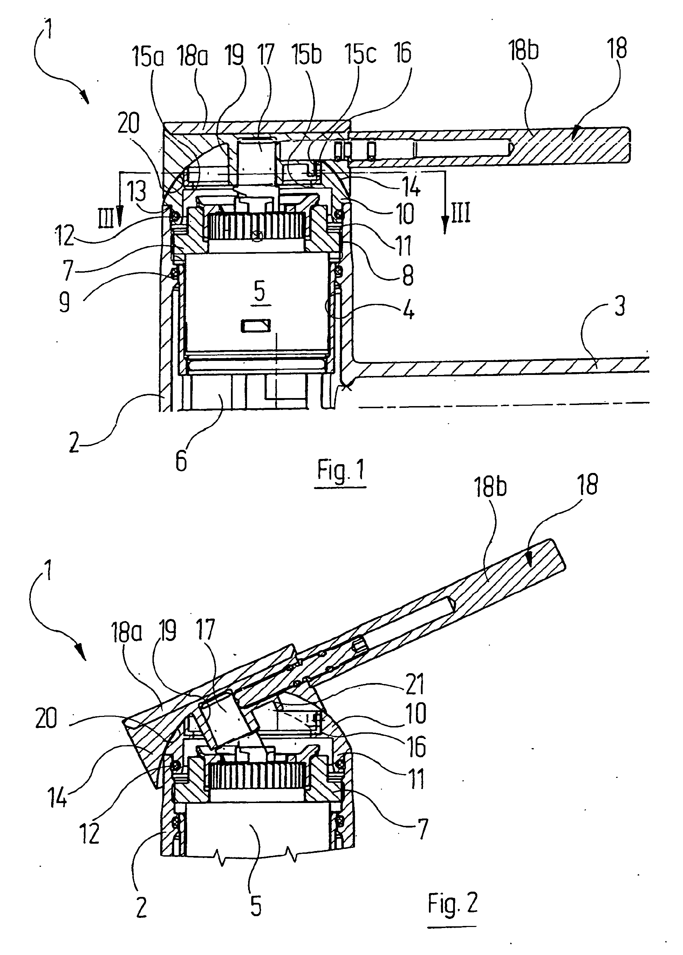

In den Figuren 1 und 2 ist nur der obere Bereich einer Einhand-Mischbatterie dargestellt, die insgesamt das Bezugszeichen 1 trägt. Sie umfasst ein Armaturengehäuse 2, an welches einstückig ein Auslauf 3 angeformt ist. Der Auslauf 3 ist nur in Figur 1 zu erkennen und dort nur teilweise dargestellt. Im Inneren des Armaturengehäuses 2 befindet sich ein Aufnahmeraum 4 für eine Steuerkartusche 5, die mindestens ein bewegliches, den Kalt- und Warmwasserstrom beeinflussendes Steuerelement besitzt. Der genaue Aufbau der Steuerkartusche 5 ist im vorliegenden Zusammenhang uninteressant und wird daher nicht näher beschrieben. Es genügt zu wissen, dass der Steuerkartusche 5 von unten her über zwei Zuleitungen 6 (nur eine in der Zeichnung erkennbar) Kalt- bzw. Warmwasser zugeführt wird und dass an der Unterseite der Steuerkartusche 5 Mischwasser austritt und zum Auslauf 3 fließt, dessen Temperatur von der Position des beweglichen Steuerelementes in der Steuerkartusche 5 abhängt.

Die Steuerkartusche 5 wird innerhalb des Armaturengehäuses 2 von einem Schraubteil 7 gehalten, welches mit seiner unteren, ringförmigen Stirnseite an einer Stufe in der Außenkontur der Steuerkartusche 5 anliegt und ein Außengewinde 8 aufweist, welches mit einem Innengewinde im oberen Bereich der Mantelfläche des Aufnahmeraumes 4 zusammenwirkt.

In den Aufnahmeraum 4 des Armaturengehäuses 2 ist von oben her ein hohlzylindrischer Kragen 11 eines Abschlussteiles 10 eingesteckt. Die äußere Mantelfläche des Kragens 11 ist gegen die Mantelfläche des Aufnahmeraumes 4 durch einen O-Ring 12 abgedichtet. Das Abschlussteil 10 liegt ferner mit einer ringförmigen Stufe 13 an der oberen Stirnseite des Armaturengehäuses 2 an.

Nach oben wird das Abschlussteil 10 durch eine ringförmige, von oben gesehen konvexe Kugelkalottenfläche 14 begrenzt. Eine Durchgangsbohrung 15 durchsetzt das Abschlussteil 10 in achsparalleler Richtung. Sie umfasst einen unteren Abschnitt 15a, der koaxial zum Aufnahmeraum 4 des Armaturengehäuses 2 ist und den größten Durchmesser aufweist. Dieser Abschnitt 15a wird nach oben durch einen zweiten Abschnitt 15b fortgesetzt, der den kleinsten Durchmesser aufweist und dessen parallel zur Achse des Abschnittes 15a in Figur 1 nach links versetzt ist, also in eine Richtung, die von dem Auslauf 3 wegweist. An diesen zweiten Abschnitt 15b schließt sich erneut in Richtung nach oben ein dritter Abschnitt 15c an, der koaxial zum zweiten Abschnitt 15b ist, jedoch einen größeren Durchmesser als letzterer besitzt.

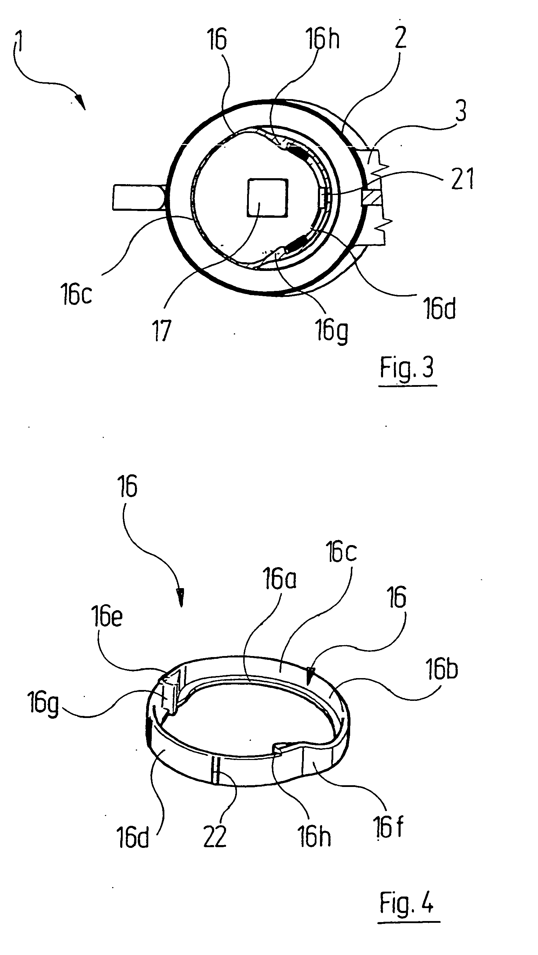

In diesen obersten Abschnitt 15c der Durchgangsbohrung 15 des Abschlussteiles 10 ist von oben her ein Gleitring 16 eingesetzt, dessen genaue Gestalt weiter unten anhand der Figuren 3 und 4 beschrieben wird.

Aus der Steuerkartusche 5 ragt nach oben in bekannter Weise ein Stellschaft 17, der dazu dient, das Steuerelement in der Steuerkartusche 5 zu bewegen. Er ist im Allgemeinen sowohl um eine horizontale Achse als auch um eine vertikale Achse verschwenkbar, um auf diese Weise die Menge und die Temperatur des ausfließenden Mischwassers zu beeinflussen, wie dies allgemein bekannt ist.

Der obere Bereich des Stellschaftes 17 ist als Vierkant ausgeführt und in eine Aufnahme 19 eines Bediengriffes 18 eingeführt. Der Bediengriff 18 ist beim dargestellten Ausführungsbeispiel aus zwei Teilen zusammengesetzt, nämlich einer in der Außenkontur zylindrischen Kappe 18a und einem an diesen lösbar angesetzten Handgriff 18b. Selbstverständlich könnte der Bediengriff 18 auch einstückig sein.

Die Kappe 18a des Bediengriffes 18 besitzt einen Außendurchmesser, der im Wesentlichen identisch mit dem Außendurchmesser des Armaturengehäuses 2 in der Nähe von dessen oberem Rand ist. In der Schließstellung stellt daher die Kappe 18a des Handgriffes 18 optisch eine Verlängerung des Armaturengehäuses 2 nach oben dar.

In die Unterseite der Kappe 18a ist eine ringförmige Kugelkalottenfläche 20 eingeformt, deren Durchmesser etwa der Kugelkalottenfläche 14 des Abschlussteiles 10 entspricht. Die Kugelkalottenfläche 20 der Kappe 18a einerseits und die Kugelkalottenfläche 14 des Abschlussteiles 10 andererseits liegen allerdings anders als beim Stande der Technik nicht unmittelbar aneinander an. Vielmehr wird die vertikale Position der Kappe 18a und damit des gesamten Bediengriffes 18 dadurch bestimmt, dass die Kugelkalottenfläche 20 am oberem Rand des Gleitringes 16 anliegt und bei einer Verschwenkung der Kappe 18a an diesem entlang gleitet, wie dies der Vergleich der Figuren 1 und 2 deutlich macht. Der obere Rand des Gleitringes 16 ist dabei in seinem Höhenverlauf so geführt, dass trotz der nicht rotationssymmetrischen Ausgestaltung des Abschlussteiles 10 beim Verschwenken des Bediengriffes 18 immer im Wesentlichen derselbe, sehr kleine Spalt zwischen den Kugelkalottenflächen 20, 14 aufrecht erhalten bleibt, dabei aber selbstverständliche die Bewegung des Bediengriffes 18 gegenüber dem Abschlussteil 10 nicht blockiert wird.

Die genaue Gestalt des Gleitrings 16, der in dem in den Figuren 1 bis 3 dargestellten Ausführungsbeispiel einer Einhand-Mischbatterie 1 eingesetzt wird, ist in Figur 4 gezeigt. Dieser Gleitring 16 ist im Profil L-förmig, wobei der kleinere Schenkel 16a des L an der Unterseite des Gleitringes 16 liegt und radial nach innen gerichtet ist. Mit diesem Schenkel 16a liegt der Gleitring 16 an der Stufe auf, die zwischen den Bereichen 15c und 15d der Durchgangsbohrung 15 des Abschlussteiles 10 gebildet ist. Der größere, senkrecht verlaufende Schenkel 16b des Gleitringes 16 trägt an seiner Oberseite den Rand, auf welchem die Kugelkalottenfläche 20 des Bediengriffes 18 aufruht und gleitet.

Der Gleitring 16 umfasst in der Draufsicht einen ersten kreisbogenförmigen Abschnitt 16c, der größeren Radius aufweist, sowie einen zweiten kreisbogenförmigen Abschnitt 16d, der kleineren Radius besitzt. In zwei Übergangsbereichen 16e und 16f findet der Übergang zwischen den unterschiedlichen Radien der Bereiche 16c und 16d statt.

An die Innenmantelfläche des senkrecht verlaufenden Schenkels 16c des Gleitringes 16 sind in der Gegend der Übergangsbereiche 16e und 16f jeweils nach innen ragende Anschläge 16g und 16h angeformt. Diese Anschläge 16g und 16h sind auch in Figur 3 gut erkennbar. Sie wirken mit einer an die Unterseite der Kappe 18a des Bediengriffes 18 angeformten Nase 21 zusammen, die ebenfalls besonders gut der Figur 3 zu entnehmen ist. Der Zweck dieser Nase 21 und der Anschläge 16g und 16h wird weiter unten deutlich werden.

An der vertikalen Außenfläche trägt der Gleitring 16 mehrere achsparallele Rippen 22, die so bemessen sind, dass der Gleitring 16 in den obersten Bereich 15c der Durchgangsbohrung 15 des Abschlussteiles 10 mit einer solchen Pressung eingeführt werden kann, dass das Abschlussteil 10 und der Gleitring 16 drehschlüssig miteinander verbunden sind.

Wie Figur 4 zeigt, ist die Höhe des Gleitrings 16 in dem den größeren Durchmesser aufweisenden Bereich 16c niedriger als in dem den kleineren Durchmesser aufweisenden Bereich 16d. Der den größeren Durchmesser aufweisende Bereich 16c befindet sich in korrekt montiertem Zustand auf der dem Auslauf 3 abgewandten Seite, während der den kleineren Durchmesser aufweisende Bereich 16d sich auf der dem Auslauf 3 zugewandten Seite befindet. Durch diese Anordnung wird gewährleistet, dass tatsächlich die Kugelkalottenfläche 20 der Kappe 18 bei allen möglichen Bewegungen des Bediengriffes 18 auf dem oberen Rand des Gleitringes 16 gleitet und dabei den Abstand zwischen den beiden Kugelkalottenflächen 20, 14 bestimmt.

Wie oben bereits erwähnt, ist weder das Abschlussteil 10 noch der Gleitring 16 rotationssymmetrisch. Beide Teile müssen daher bei der Montage im Armaturengehäuse 2 in ihrer Winkelausrichtung positioniert werden. Dies geschieht auf folgende Weise:

Zunächst wird der Gleitring 16 in den obersten Abschnitt 15c der Durchgangsbohrung 15 des Abschlussteiles 10 eingedrückt und auf diese Weise fixiert. Sodann wird die aus Abschlussteil 10 und Gleitring 16 bestehende Einheit von oben in den Aufnahmeraum 4 des Armaturengehäuses 2 eingesteckt, ohne auf eine bestimmte Orientierung zu achten. Dabei ist selbstverständlich in letzterem die Steuerkartusche 5 bereits angeordnet und durch das Schraubteil 7 fixiert. Nunmehr wird von oben her die Kappe 18a des Bediengriffes 18 aufgesetzt, wobei der obere Bereich des Stellschaftes 17 in die Aufnahme 19 der Kappe 18a hinein gleitet. Der Weg des Stellschaftes 17 in die Aufnahme 19 hinein wird nunmehr jedoch nicht wie beim Stand der Technik durch einen Anschlag zwischen diesen beiden Teilen begrenzt sondern dadurch, dass die Kugelkalottenfläche 20 der Kappe 18a am oberen Rand des Gleitringes 16 zur Anlage kommt.

Nunmehr muss das Abschlussteil 10 mit dem Gleitring 16 noch in die richtige Winkelposition gebracht werden. Dies geschieht dadurch, dass der Bediengriff 18 in die eine oder andere Richtung um seine vertikale Schwenkachse verdreht wird. Dabei kommt früher oder später die Nase 21 der Kappe 18a mit einem der Anschläge 16g bzw. 16h des Gleitringes 16 in Berührung. Der Bediengriff 18 wird weiter verdreht, bis ein innerer Anschlag innerhalb der Steuerkartusche 5 wirksam wird. Dabei werden Abschlusskappe 10 und Gleitring 16 in die richtige Winkelposition gebracht. Der Bediengriff 18 wird sodann in geeigneter Weise an dem Stellschaft 17 fixiert. Die Einhand-Mischbatterie ist nunmehr im Wesentlichen betriebsbereit.

## Patentansprüche

1. Sanitäre Einhand-Mischbatterie mit
a) einem Armaturengehäuse (2);
b) einer Steuerkartusche (5), die in einem Aufnahmeraum (4) des Armaturengehäuses (2) angeordnet ist und mindestens ein einen Wasserstrom steuerndes Steuerelement aufweist, das seinerseits von einem um mindestens eine Achse verschwenkbaren Stellschaft (17) bewegbar ist;
c) einem ringförmigen Abdeckteil (10), welches den Aufnahmeraum (4) der Steuerkartusche (5) nach oben teilweise abdeckt, eine von oben gesehen konvexe ringförmige äußere Kugelkalottenfläche (14) aufweist und von dem Stellschaft (17) durchsetzt wird;
d) einem Bediengriff (18), der seinerseits umfasst:
da) eine Kappe (18a), welche das Abdeckteil (10) übergreift und an ihrer Unterseite eine Aufnahme (19) aufweist, in welche der obere Endbereich des Stellschaftes (17) einführbar ist;
db) einen Handgriff (18b), der starr mit der Kappe (18a) verbunden ist;
wobei
e) die Kappe (18a) des Bediengriffs (18) an ihrer Unterseite eine von unten gesehen konkave ringförmige Kugelkalottenfläche (20) aufweist;
**dadurch gekennzeichnet, dass**
f) an dem Abdeckteil (10) ein Gleitring (16) gehaltert ist, der die Kugelkalottenfläche (14) des Abdeckteils (10) nach oben überragt und auf dessen oberem Rand die Kugelkalottenfläche (20) der Kappe (18a) gleitet;
derart, dass
g) die Kugelkalottenflächen (14, 20) des Abdeckteils (10) und der Kappe (18a) in allen Positionen des Bediengriffs (18) einen definierten, geringen Abstand voneinander aufweisen.

2. Sanitäre Einhand-Mischbatterie nach Anspruch 1, **dadurch gekennzeichnet, dass** das Abdeckteil (10) und/oder der Gleitring (16) nicht rotationssymmetrisch und drehschlüssig miteinander verbunden sind, derart, dass die Winkelposition des Abdeckteils (10) durch Verdrehen des Gleitrings (16) einstellbar ist.

3. Sanitäre Einhand-Mischbatterie nach Anspruch 2,
**dadurch gekennzeichnet, dass** an der Unterseite der Kappe (18a) mindestens eine nach unten ragende Nase (21) vorgesehen ist, die beim Verdrehen des Bediengriffs (18) mit mindestens einem an dem Gleitring (16) vorgesehenen Anschlag (16g, 16h) zusammenwirkt.

## Claims

1. Sanitary single-lever mixer tap having:
a) a fitting housing (2);
b) a control cartridge (5) which is arranged in a receiving space (4) in said fitting housing (2) and has at least one control element which controls a flow of water and can be moved, for its part, by an adjusting shaft (17) which is swivellable about at least one axis;
c) an annular masking part (10) which partially masks the receiving space (4) in the control cartridge (5) in the upward direction, has an annular outer spherical-shell face of convex shape, viewed from above, and has the adjusting shaft (17) passing through it;
d) an operating handle (18) which, for its part, comprises:
da) a cap (18a) which engages over the masking part (10) and has, on its underside, a receptacle (19) into which the upper end region of the adjusting shaft (17) can be introduced;
db) a hand lever (18b) which is rigidly connected to the cap (18a);
wherein
e) the cap (18a) of the operating handle (18) has, on its underside, an annular spherical-shell face (20) which is concave, viewed from below;
**characterised in that**
f) there is mounted on the masking part (10) a slide ring (16) which protrudes above the spherical-shell face (14) of the masking part (10) in the upward direction and on whose upper rim the spherical-shell face (20) of the cap (18a) slides;
in such a way that
g) the spherical-shell faces (14, 20) of the masking part (10) and of the cap (18a) are at a defined, slight distance from one another in all the positions of the operating handle (18).

2. Sanitary single-lever mixer tap according to claim 1, **characterised in that** the masking part (10) and/or the slide ring (16) are connected to one another in a non-rotationally symmetrical and rotationally locked manner, in such a way that the angular position of the masking part (10) can be set by twisting the slide ring (16).

3. Sanitary single-lever mixer tap according to claim 2, **characterised in that** there is provided, on the underside of the cap (18a), at least one downwardly projecting nose (21) which interacts, when the operating handle (18) is twisted, with at least one stop (16g, 16h) provided on the slide ring (16).

## Revendications

1. Mélangeur sanitaire à commande d'une seule main, comprenant
a) un carter de robinetterie (2) ;
b) une cartouche de commande (5), logée dans un espace de réception (4) dudit carter de robinetterie (2) et munie d'au moins un élément de commande qui pilote un écoulement d'eau et peut, à son tour, être mis en mouvement par l'intermédiaire d'une tige de réglage (17) pouvant pivoter autour d'au moins un axe ;
c) une partie annulaire de recouvrement (10) qui occulte partiellement, vers le haut, ledit espace de réception (4) de la cartouche de commande (5), est pourvue d'une surface annulaire extérieure (14) de calotte sphérique, convexe observée par-dessus, et est traversée par ladite tige de réglage (17) ;
d) une poignée d'actionnement (18) incluant, à son tour :
da) une coiffe (18a) qui surmonte ladite partie de recouvrement (10) et présente, à sa face inférieure, un logement (19) dans lequel la région extrême supérieure de ladite tige de réglage (17) peut être insérée ;
db) une manette (18b) reliée rigidement à ladite coiffe (18a) ;
sachant que
e) ladite coiffe (18a) de la poignée d'actionnement (18) comporte, à sa face inférieure, une surface annulaire (20) de calotte sphérique dont la configuration est concave observée par-dessous ;
**caractérisé par le fait**
f) **qu'**une bague de glissement (16), retenue sur la partie de recouvrement (10), fait saillie vers le haut au-delà de la surface (14) de la calotte sphérique de ladite partie de recouvrement (10), la surface (20) de la calotte sphérique de la coiffe (18a) effectuant alors un glissement sur le bord supérieur de ladite bague,
de façon telle que
g) les surfaces (14, 20) des calottes sphériques de ladite partie de recouvrement (10), et de ladite coiffe (18a), soient mutuellement espacées d'une faible distance bien définie dans tous les emplacements occupés par la poignée d'actionnement (18).

2. Mélangeur sanitaire à commande d'une seule main, selon la revendication 1, **caractérisé par le fait que** la partie de recouvrement (10) et/ou la bague de glissement (16) est/sont dépourvue(s) de symétrie de révolution et sont reliées l'une à l'autre, avec solidarisation tournante, de telle sorte que la position angulaire de ladite partie de recouvrement (10) puisse être réglée par rotation de ladite bague de glissement (16).

3. Mélangeur sanitaire à commande d'une seule main, selon la revendication 2, **caractérisé par le fait qu'**au moins un bec (21) en saillie vers le bas à la face inférieure de la coiffe (18a) coopère, lors de la rotation de la poignée d'actionnement (18), avec au moins une butée (16g, 16h) prévue sur la bague de glissement (16).
